Europäisches Patentamt

European Patent Office

Office européen des brevets

(11) Publication number: **0 444 774 A2**

# EUROPEAN PATENT APPLICATION

(21) Application number: 91300535.1

(22) Date of filing: 24.01.91

(51) Int. Cl.$^5$: **G06F 13/40**

(30) Priority: 29.01.90 US 471749

(43) Date of publication of application:
04.09.91 Bulletin 91/36

(84) Designated Contracting States:
**DE FR GB**

(71) Applicant: **RAYTHEON COMPANY**
**141 Spring Street**
**Lexington Massachusetts 02173 (US)**

(72) Inventor: **Rallapalli, Krishna**
**3184 Linkfield Way**
**San Jose, California (US)**

(74) Representative: **Jackson, David Spence et al**
**REDDIE & GROSE 16, Theobalds Road**
**London, WC1X 8PL (GB)**

(54) **Method and apparatus for driving a digital bus.**

(57) To reduce the maximum possible switching transient, each new word (22a) to be applied to the bus (60) is compared to the word (22b) already on the bus (60), and, if the two words differ by more than half the number of bits in each word, the polarity of the bus (60) is inverted by XOR gates ($24_0 .. 24_{N-1}$). In this way, no more than half the number of bits in each word will have to change at one time. Comparison logic (50) at the transmitting end of the bus (60) compares the two words stored in latches (22a, 22b). Also, both the transmitting and receiving ends of the bus (60) contain inverting logic ($24_0 .. 24_{N-1}$ ; $44_0 ..44_{N-1}$). In a second embodiment of the invention, the polarity of the bus is inverted if more than half of the bits in a word to be applied to the bus are logic zero. A method for applying this technique to non-volatile memories in order to reduce fatigue is also disclosed.

EP 0 444 774 A2

*Fig. 1*

# METHOD AND APPARATUS FOR DRIVING A DIGITAL BUS

## Background of the Invention

This application relates generally to the interconnection of electrical circuits and more particularly to the interconnection of electrical circuits by means of a plurality of signal lines comprising a bus.

Improvements in integrated circuit technology have allowed very large circuits to be fabricated on a single chip. These large circuits perform complex functions and often have many inputs and outputs. These inputs and outputs are connected to other chips or system elements through package pins. Some large chips are packaged literally with hundreds of package pins.

The majority of these package pins are often connected to busses. The busses carry groups of related signals to other chips in the system. For example, address and data busses are widely used in computer systems.

A problem results when many output lines are connected to a bus. The outputs on all the lines of a bus become active simultaneously. If the values on any of the lines have to change state, there is necessarily a flow of current associated with the change of state. If a line is going from a low to a high state, current flows from the chip into the line to charge up the line. If the line is going from high to low, current flows into the chip from the line to discharge the line. When many of the lines change state simultaneously, this current flow can become significantly large.

A large current flow can create a voltage spike which disrupts operation of the circuit. In particular, when many lines switch from high to low, a large current flows into the chip from those lines. That current flows from the chip through bonding wires to pins that are connected to the system ground. The path from the chip to system ground has an inductive reactance. Therefore, the current flow induces a voltage in this path. With this induced voltage present, the ground on the chip is not truly at ground potential. False logic signals can result. The magnitude of the induced voltage increases proportionately with the size of the current flow through the path.

One way to avoid the problems caused by the induced voltage is to add many paths from the chip to ground. The current flow through each path is then smaller and the induced voltage is less. These added paths take the form of added ground pins. As an example, an ECL gate array chip might have 180 input/output pins with 40 of those pins connected to ground.

The disadvantage of this approach is that many of the package pins are dedicated to avoiding voltage spikes. The number of pins in a package is often constrained so that dedicating some pins to ground connections reduces the number of pins available for input/output pins. Some complex functions require many input/output pins and dedicating extra pins for package grounds is not always an effective solution.

## Summary of the Invention

It is an object of this invention to provide a means for reducing voltage spikes in an electrical circuit when the states of the circuit output lines change state.

It is a further object of this invention to reduce switching voltage spikes in an integrated circuit without dedicating extra package pins for grounding connections.

The foregoing and other objects of this invention are achieved by improved bus driver circuitry and an added control line on the bus. The added control line indicates the polarity of the bus.

In one embodiment, the driver circuitry stores the state of the information on the bus. When new information is applied to the bus driver, the driver compares the new information with the current state of the information on the bus. If the new information would require greater than one half of the lines on the bus to change state, the driver inverts the polarity of the bus by changing the state of the control line. A chip receiving information from the bus, in response to a change of the polarity control line, inverts the polarity of its receivers. Thus, when the information on more than half the lines on the bus has to change, the polarity of the receiver changes rather than changing the level on the bus lines. In this way, it can be ensured that the state of no more than half of the bus lines will change at one time.

In a second embodiment, the polarity of the bus is changed to ensure that less than one-half of the lines on the bus are in a low voltage state. In this way, always less than one-half of the bus lines will transition from a high to low voltage state.

In a third embodiment, the method is applied to driver circuitry for a non-volatile memory rather than to bus drivers. In this way, the number of state changes of the memory is reduced and memory fatigue is correspondingly reduced.

## Brief Description of the Drawings

The invention can be better understood by reference to the following more detailed description and accompanying figures in which:

FIG. 1 shows a simplified block diagram of a system incorporating the invention;

FIG. 2 shows a simplified block diagram of a system incorporating an alternative embodiment of the invention; and

FIG. 3 shows a simplified block diagram of an alternative use of the invention in a memory.

## Description of the Preferred Embodiments

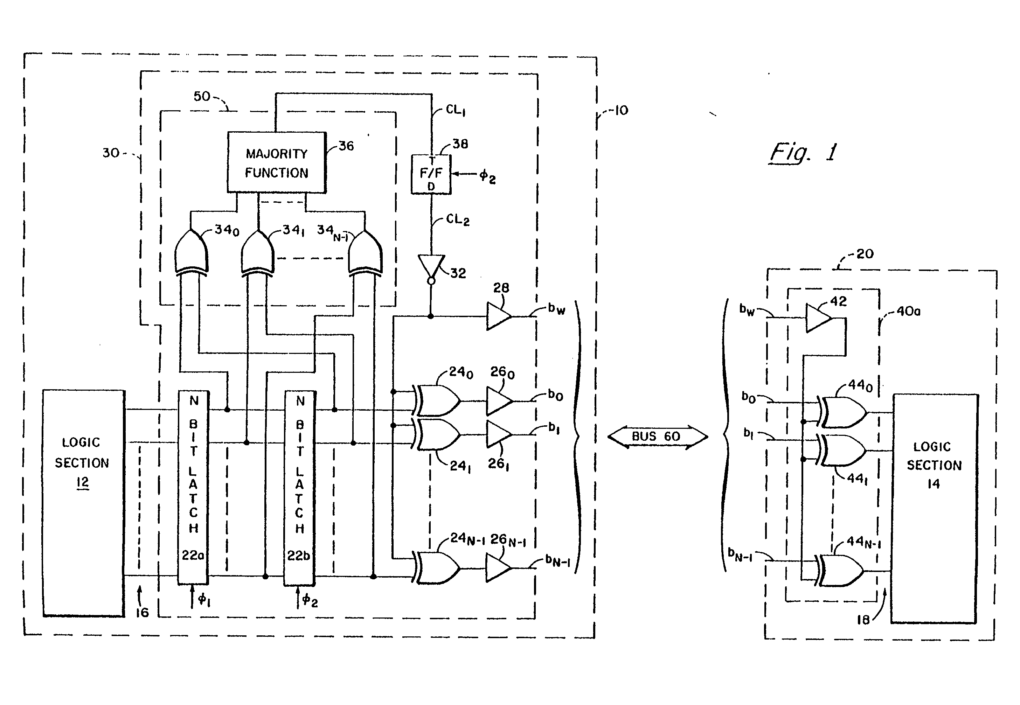

FIG. 1 shows a simplified block diagram of a system incorporating the invention. This simple system contains chips 10 and 20. Chips 10 and 20 could be any known chip. Moreover, chips 10 and 20 could in general be any two electrical circuits, but the discussion is focused on semiconductor chips for clarity. The chips contain logic sections 12 and 14 which perform some logic function. For example, logic sections 12 and 14 could be transistor gate arrays.

Chips 10 and 20 are connected together by bus 60. Bus 60 is a plurality of wires, traces or lines (hereafter simply "lines") of known construction for carrying information. A bus also contains handshake lines, but these lines are not explicitly shown.

Chip 10 is shown to contain a bus driver 30 putting information from logic section 12 onto bus 60. Chip 20 has a bus receiver 40 for taking information from bus 60 and providing it to logic section 14.

To place information on bus 60, logic section 12 places the digital information on lines 16. That information is latched into N-bit latch 22a. For reasons to be described in detail later, N-bit latch 22b contains the words currently being written onto bus 60.

Weight control logic 50 accepts as inputs the information in latches 22a and 22b. Weight control logic 50 determines whether the polarity of the bus should be inverted. "Inverting the polarity of the bus" has the following meaning: Each bus line conveys one bit of information. Each bit has a value of logic one or logic zero. The bit is represented by a voltage on the line of approximately zero volts or approximately five volts. A voltage of five volts could represent a logic one; but it could just as well represent a logic zero. So long as both bus driver 30 and bus receiver 40a interpret a voltage of five volts and a voltage of zero volts the same, it does not matter which represents a logic one and which represents a logic zero. The polarity of the bus is inverted by changing whether a voltage of five volts represents a logic one or logic zero.

When weight control logic 50 places a low voltage on line $CL_2$, a logic one is represented on the bus by a voltage of approximately five volts and a logic zero is represented by a voltage of approximately zero volts. Changing the state of line $CL_2$ inverts the polarity of the bus. As can be seen in FIG. 1, a logic high on control line $CL_1$ causes the output of flip-flop 38 to toggle. Flip-flop 38a is a conventional toggle type flip-flop. As shown, when the output of flip-flop 38 toggles, line $CL_2$ toggles and the polarity of the bus is inverted.

Inverting the polarity of the bus at the appropriate time ensures that of the N lines $b_0...b_{N-1}$ making up the bus, no more than half of those lines will change state at any given time. The maximum switching transient voltage is thereby cut in half, since no more than half the lines change state simultaneously. Here, weight control logic 50 produces a logic high on line $CL_1$ whenever the next word to be applied to bus 60 would change more than one half of the lines on the bus. It will be appreciated after a little thought that if X of the N lines must change state, inverting the bus means that only N-X of the lines must change state.

Weight control logic 50 determines if more than one half of the bus lines must change state. Each of the exclusive (XOR) gates $34_0...34_{N-1}$ has as its inputs one bit from n-bit latch 22a and the corresponding bit from n-bit latch 22b. The bit from latch 22b represents the value on one line of the bus 60. The bit from latch 22a represents the value that is to be placed on that line of bus 60. The XOR gates $34_0...34_{N-1}$ each produce a logic one output when one of the lines of bus 60 must change state.

All of the outputs of XOR gates $34_0...34_{N-1}$ are fed to majority function logic 36. If more than half of the outputs of XOR gates $34_0...34_{N-1}$ are logic one, i.e. the values on more than half of the lines of bus 60 will change, majority function logic 36 produces a logic high on line $CL_1$. As described above, a logic high on line $CL_1$ toggles the value on line $CL_2$ and inverts the polarity of the bus.

The actual inversion of the polarity is achieved by inverter 32 in conjunction with exclusive OR (XOR) gates $24_0...24_{N-1}$. With a logic one on line $CL_2$, the output of inverter 32 will be logic zero. The first input of each of the XOR gates $24_0...24_{N-1}$ will be zero and the output of XOR gates $24_0...24_{N-1}$ will just be the value at the second input. With a logic zero on line $CL_2$ and a logic one at the output of inverter 32, the outputs of XOR gates $24_0...24_{N-1}$ will be the inverse of whatever is applied to the second input of the XOR gates. As can be seen, XOR gates $24_0...24_{N-1}$ are in series between n-bit latch 22b and bus 60. Thus, they act to invert the word in n-bit latch 22b before it is applied to bus 60 when line $CL_2$ has a logic zero on it.

It should be noted that XOR gates $24_0...24_{N-1}$ are connected to bus 60 through buffers $26_0...26_{N-1}$. These are conventional buffers and serve only to boost the signal level so that the proper voltage and current levels are provided to bus 60.

At the receive end of bus 60 on chip 20, the same type of inversion is performed by receive section 40. Each of the lines $b_0...b_{N-1}$ of bus 60 is fed into one of the XOR gates $44_0...44_{N-1}$. The output of inverter 32 is also provided to receive section 40 on bus line $b_W$. After passing through buffer 42, the output of inverter 32 is applied as the second input to each of the XOR gates $44_0...44_{N-1}$. If XOR gates $24_0...24_{N-1}$ inverted the signals before they were placed on the bus, XOR gates $44_0...44_{N-1}$ will invert them again after they come off the bus to restore their appropriate level. These signals are then applied to logic section 14 the same as in a conventional chip.

It should be noted that most timing of the operation of the components on chips 10 and 20 is omitted for clarity. However, one aspect of the timing is significant and is shown. Two clock phases, $\varnothing_1$ and $\varnothing_2$ are shown for chip 10. It is important that the new digital word to be applied to the bus be known before the old word on the bus is changed. Thus, the new word is clocked into n-bit latch 22a on clock phase $\varnothing_1$. Weight control loigc 50 can thus operate on both values during clock phase $\varnothing_1$. At the start of clock phase $\varnothing_2$, the output of weight control logic is stored in flip-flop 38 and the new word is put into n-bit latch 22b for application to bus 60.

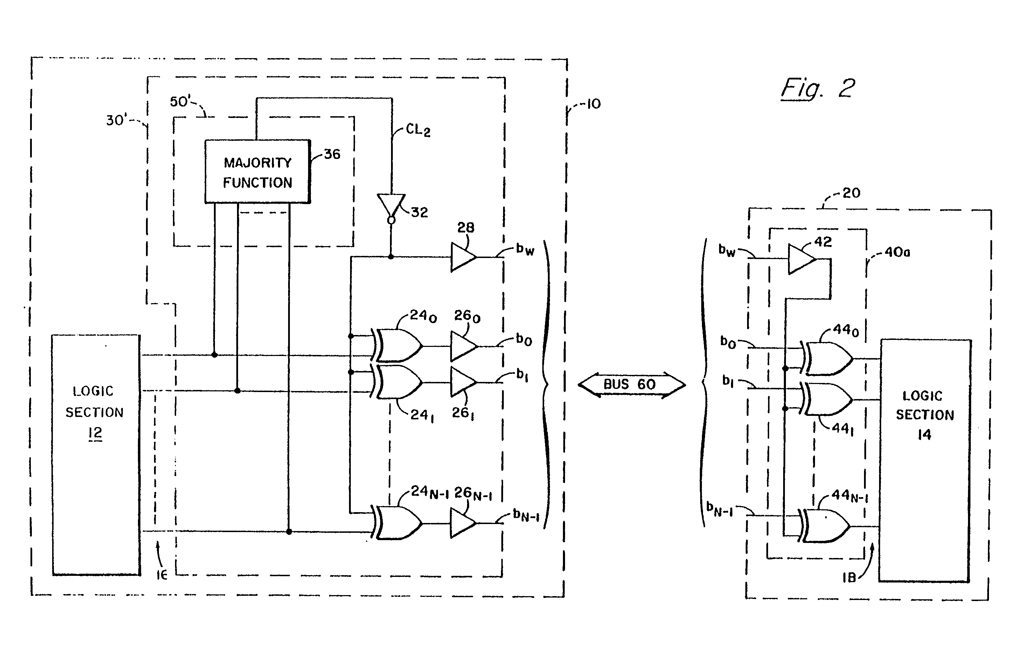

The two phase clock as shown in FIG. 1 slows down the operation of bus driver 30. FIG. 2 shows an alternative embodiment. The embodiment of FIG. 2 makes use of the fact that the most disruptive switching transients occur when current flows from bus 60 through bus driver 30. These switching transients appear on the chip ground, which is a reference. Switching transients resulting from the flow of current out of bus driver 30 appear at the positive supply of the chip. As the positive supply is seldom used as a reference, these transients are not disruptive.

As described above, the switching transient appears on the chip ground when lines on bus 60 are switched to a low voltage. Thus, the maximum possible switching transient at chip ground can also be reduced by ensuring that no more than one-half of the lines on bus 60 ever are in the low state at once.

In the circuit of FIG. 2, each of the lines 16 passes directly to one of the XOR gates $24_0...24_{N-1}$. As described above, XOR gates $24_0...24_{N-1}$ act as inverters when the signal on line $CL_2$ is low. The signal on line $CL_2$ is produced by weight control logic 50'. Weight control logic 50' puts a logic zero on line $CL_2$ whenever the majority of the lines 16 has a zero on it. Thus, the polarity of the bus is inverted to ensure that no more than half of the lines on the bus are in a low voltage state.

After a little thought, it may be appreciated that the scheme of FIG. 2 may allow more than half of the lines on bus 60 to change simultaneously. However, the number of lines which change and sink current through bus driver 30' to ground will never be more than one-half of N, the total number of bus lines. Thus, the disruption to logic section 12 is at most one-half of what it could be if all the lines on bus 60 changed as in a conventional system.

The system of FIG. 2 can also be applied in other areas. For example, certain types of non-volatile memories suffer from a problem known as "fatigue". The memory cells cease to function properly if they change state too often.

In one type of memory, the destructive readout memory, the problem is particularly acute. Taking ferroelectric memories as an example, information stored in one memory cell is read from the memory by writing a known logic value to that memory cell. The current flow into the cell during this read operation is measured. A large current flow is associated with a change of state of the cell during the read operation. For example, if the cell is written with a logic low voltage to store logic low, a large current flows during a read operation in which the cell is written with a logic high voltage. Of course, the logic low voltage must be rewritten into the cell after the read operation. Thus, if the cell stores a logic low voltage, the read operation requires two state changes for the memory cell and contributes to the fatigue of the memory cells. But if the cell stores a logic high voltage, no state changes occur during the read. It would therefore be better if as many of the cells as possible stored information in the logic high voltage state. The requirement in this case is directly analagous to the bus driving arrangement of FIG. 2 where it is desirable for as many of the lines on bus 60 to be at a high voltage.

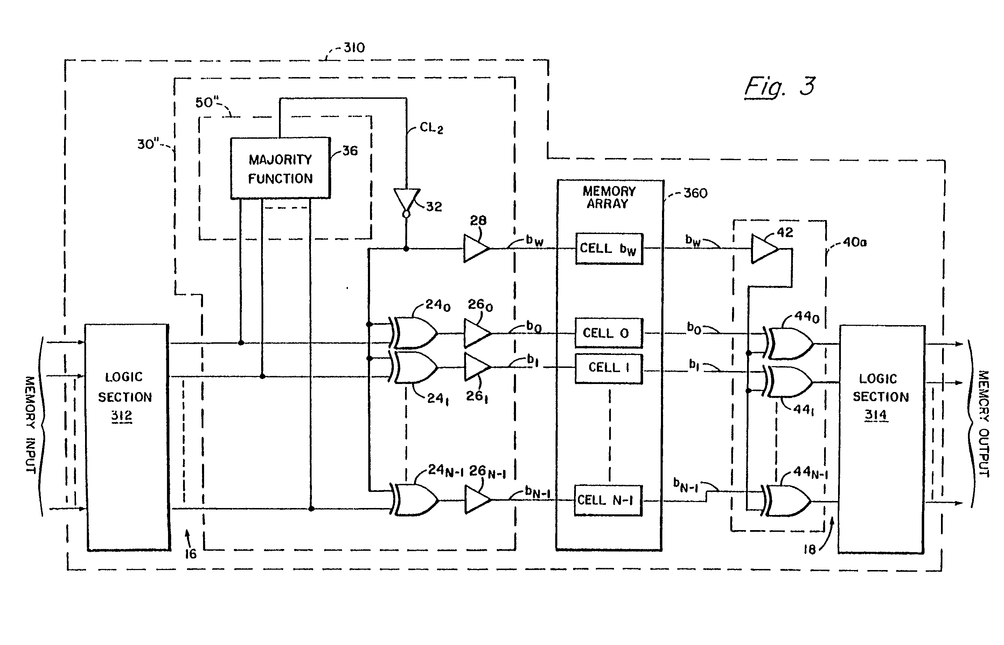

FIG. 3 shows the scheme of FIG. 2 applied to a memory 310. Each of the lines $b_0...b_{N-1}$ goes to a memory cell in a memory array 360. Additionally, line $b_W$ goes to a cell in memory array 360. The cells of memory array 360 here depict ferroelectric cells of known construction, but could be any type of memory. Also, memory array 360 is shown to contain N+1 cells. It will be appreciated that memory array 360 would likely contain many more cells. For example, the N+1 cells shown for memory array 360 might represent storage for one word in a memory which stores 16K words. Additionally, the memory would contain addressing logic to steer the information on lines $b_0...b_{N-1}$ to selected ones of the cells. Such circuitry is commonly included in memories and is not explicitly shown here. Also, logic section 312 in FIG. 3 represents the write control logic of the memory. Logic section 314 represents the read control logic. As shown, the write control and read control logic are separate elements. In an actual memory, there would be some overlap between read control logic and write control logic.

As can be seen in FIG. 3, information to be written into memory appears on lines 16. Driver section 30" inverts the data if appropriate to ensure more memories are programmed in the high voltage state. During a read operation, a high voltage is applied to the cells, but less than half will undergo a state change.

The line $b_W$ contains a signal indicating whether the information stored in memory has been inverted. The value of line $b_W$ is also stored in a memory cell and is read from the memory and provided to read section 40".

Having described several embodiments of the invention, it will be apparent to one of skill in the art that various modifications could be made. For example, circuits could be developed which perform the logic functions described herein. Also, N-bit latch 22a can be omitted if the outputs of logic section 12 on lines 16 are latched. Additionally, this technique could be applied to various types of electrical circuits when state changes on various lines must be minimized. It is felt, therefore, that the invention should be limited only by the spirit and scope of the appended claims.

## Claims

1. A method of driving a digital bus containing a plurality of lines to transmit across the bus a first and a second digital words, each word having N-bits, the method comprising the steps of:

    a) applying each bit of the first digital word to one of the plurality of lines on the bus;

    b) comparing the corresponding bits of the first and second words to determine the number of bits which differ in the first and second words; and

    c) applying each bit of the second digital word to one of the plurality of lines on the bus when the comparison indicates the number of bits which differ is less than or equal to one half of N and applying the inverse of each bit of the second digital word to one of the plurality of lines on the bus when the comparison indicates the number of bits which differ is greater than one half N.

2. A method of driving a digital bus to apply sequentially a plurality of digital words, each having N-bits, the method comprising:

    a) establishing a polarity of the bus such that each bit is represented by a voltage on a bus line, with a bit value of logic one represented by a first voltage and a bit value of logic zero represented by a second voltage;

    b) applying a first word to the bus with the first polarity;

    c) for each successive word,

        i) determining the number of bits in the word differing from bits in the word previously applied to the bus;

        ii) when the number of bits differs by more than half the number of bits in the word, inverting the polarity of the bus; and

        iii) applying the word to the bus.

3. The method of Claim 2 wherein the step of inverting the polarity of the bus comprises:

    generating a signal which controls a plurality of inverters at the transmitting end of the bus and at the receiving end of the bus.

4. In a digital system of the type containing at least two semiconductor chips connected by a digital bus, an improvement comprising:

    a) a bus driver in a first one of the semiconductor chips comprising:

        i) means for determining the number of bits that differ between a word on the bus and a word to be applied to the bus;

        ii) means for inverting each of the bits in the word to be applied to the bus when the number of bits which differ exceeds a predetermined threshold; and

    b) a bus receiver in a second one of semiconductor chips comprising:

        i) means for controllably inverting each of bits in the word applied to the bus.

5. The apparatus of Claim 4 wherein the predetermined threshold comprises one half of the number of bits in the word applied to the bus.

6. The apparatus of Claim 5 additionally comprising a control line between the first chip and the second chip, said control line having a value indicating whether the word applied to the bus has been inverted.

7. The apparatus of Claim 6 wherein the means for controllably inverting inverts each of the bits on the bus in response to the control line.

8. The apparatus of Claim 7 wherein the means for determining the number of bits that differ comprises a first means for storing the word on the bus and a second means for storing the word to be applied to the bus.

9. The apparatus of Claim 8 wherein the output of the second means is connected to the input of the first means.

10. The apparatus of Claim 7 wherein the control signal is generated by control logic comprising: a flip-flop, the output of which toggles when the means for determining the number of bits which differ indicates more than the threshold number of bits differ.

11. The apparatus of Claim 10 wherein the means for inverting comprises a plurality of exclusive OR gates, one input of each gate connected to one bit of the word to be inverted and one input of each gate coupled to the output of the flip-flop through an inverter.

12. In an electronic system of the type having a first electronic circuit and a second electronic circuit connected by a plurality of lines, an improvement comprising:

a) a signal line connecting the first electronic circuit to the second electronic circuit;

b) first logic means, coupling a plurality of bits from the output of the first electronic circuit to the plurality of lines, for placing the signal line in a first state when one-half of the plurality output bits of the first electronic circuit are in a first state and for coupling to the plurality of lines the inverse of the plurality of bits; and

c) second logic means, coupling a plurality of bits from the plurality of lines to the input of the second electronic circuit, for coupling to the input of the second electronic circuit the inverse of the signal on the plurality of lines when the signal line is in a first state.

13. The electronic system of Claim 12 additionally comprising a plurality of memory cells, each memory cell coupled to one of the plurality lines and wherein information coupled onto the plurality of lines is stored into memory and information coupled from the lines is read from memory.

14. The electronic system of Claim 13 wherein the first electronic circuit comprises write control logic of a memory and the second electronic element comprises read control logic of a memory.

15. The electronic system of Claim 12 wherein the first logic means comprises:

a) third logic means for producing an output signal indicating when a majority of its inputs have a first state, the inputs of the logic means being connected to the plurality of bits from the output of the first electronic circuit; and

b) a plurality of XOR gates, one input of each XOR gate being connected to one of the plurality of bits from the output of the first electronic circuit, and the second of the inputs of each XOR gate coupled to the output of the third logic means.

Fig. 1

Fig. 2

MEMORY OUTPUT

LOGIC SECTION 314

Fig. 3

MEMORY ARRAY

CELL $b_W$

CELL 0

CELL 1

CELL N-1

MAJORITY FUNCTION

LOGIC SECTION 312

MEMORY INPUT